Europäisches Patentamt

European Patent Office

Office européen des brevets

(11) Publication number: **0 287 044**
**A1**

## (12) EUROPEAN PATENT APPLICATION

(21) Application number: 88105832.5

(22) Date of filing: 13.04.88

(51) Int. Cl.⁴ **B66F 3/46 , B64F 5/00**

(30) Priority: 16.04.87 DE 3713007

(43) Date of publication of application:
19.10.88 Bulletin 88/42

(84) Designated Contracting States:
AT CH ES FR GB IT LI

(71) Applicant: **Hydro-Gerätebau GmbH & Co. KG
Hebezeuge
Industriegebiet
D-7616 Biberach/Baden(DE)**

(72) Inventor: **Scharsig, Hans-Hermann
Drehersacker 11
D-7600 Offenburg(DE)**
Inventor: **Klem, Herbert
Neugasse 36
D-7640 Kehl 15(DE)**

(74) Representative: **Schmitt, Hans, Dipl.-Ing. et al
Patentanwälte Dipl.-Ing H. Schmitt Dipl.-Ing.
W. Maucher Dreikönigstrasse 13
D-7800 Freiburg(DE)**

(54) **Arrangement for lifting aircraft.**

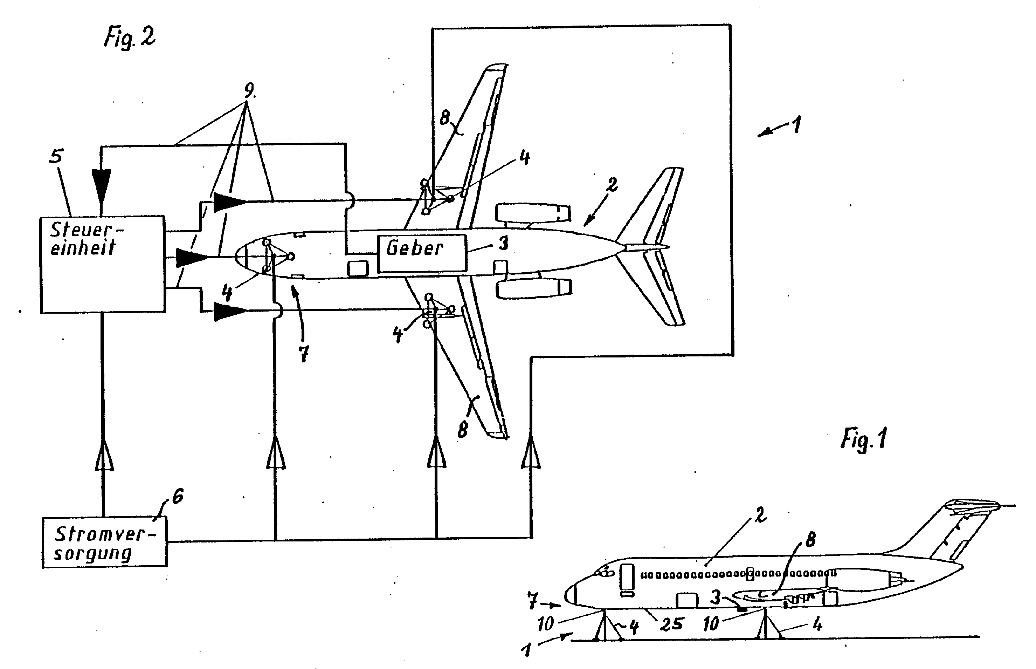

(57) Eine Einrichtung (1) (Fig. 2) dient zum Hochbocken von Flugzeugen mit Hilfe von hydraulischen Hebern (4), die unter den Tragflächen und dem Bug des Flugzeuges ansetzbar sind. Sie weist einen am Flugzeug anbringbaren Lagegeber (3) auf, der zur Einhaltung einer vorgebbaren Lage des Flugzeuges während des Anhebens oder Absenkens mit den Hebern (4) in Steuerverbindung steht. Bei Abweichungen aus der vorgebbaren Sollage werden die Heber (4) entsprechend unterschiedlich angesteuert, bis sich wieder die Sollage einstellt. Mit Hilfe dieser erfindungsgemäßen Einrichtung läßt sich ein Flugzeug von einer Bedienperson nivelliert aufbocken oder auch absenken.

Fig. 2

## Einrichtung zum Hochbocken von Flugzeugen

Die Erfindung betrifft eine Einrichtung zum Hochbocken von Flugzeugen mit Hilfe von wenigstens drei vorzugsweise hydraulischen Hebern, die insbesondere unter den Tragflächen und dem Bug des Flugzeuges ansetzbar sind.

Bisher werden Flugzeuge, insbesondere mittelgroße und Großflugzeuge, durch einen Hebesatz mit üblicherweise drei Hebern z. B. zu Reparatur- oder Wartungszwecken angehoben. Dabei kann dann das Flugzeug so weit angehoben werden, daß z. B. die Fahrwerke ein- und ausgefahren bzw. ausgebaut und ausgewechselt werden können. Analoges gilt für andere Reparaturarbeiten.

Für dieses Hochbocken sind bisher i. d.R. zum Bedienen jedes Hebers eine Person sowie zum Beobachten des Hebevorganges und zum Nachstellen der Sicherheitsmutter (Absturzsicherung beim Versagen der Hydraulik) jeweils eine weitere Person erforderlich. Zusätzlich wird eine Person zum Beobachten der bordeigenen Nivelliereinrichtung (z. B. Libelle im Cockpit oder Pendel im Fahrwerksschacht) und zur Kommandierung der Heber nötig. Schließlich ist noch eine verantwortliche Person zur Überwachung des gesamten Vorganges erforderlich. Daraus ergibt sich, daß i.d.R. insgesamt acht Personen eingesetzt werden müssen, was einen erheblichen Aufwand bedeutet. Dieser Aufwand ist jedoch bisher erforderlich, um sicherzustellen, daß das Flugzeug während des Hochbockens bzw. auch des Ablassens in einer vorgegebenen, ausnivellierten Lage bleibt.

Aufgabe der vorliegenden Erfindung ist es, eine Einrichtung der eingangs erwähnten Art zu - schaffen, die so ausgebildet ist, daß die Bedienung mit wesentlich reduziertem Aufwand durchgeführt werden kann und wobei die Sicherheit des Arbeitsablaufes erhöht ist.

Zur Lösung dieser Aufgabe wird erfindungsgemäß insbesondere vorgeschlagen, daß die Einrichtung einen am Flugzeug anbringbaren Lagegeber aufweist, der zur Einhaltung einer vorgebbaren Lage des Flugzeuges während des Anhebens oder Absenkens mit den Hebern in Steuerverbindung steht. Von diesem Lagegeber aus werden entsprechend den Abweichungen der Flugzeuglage gegenüber den Sollwerten bezüglich der Längs- als auch der Querneigung des Flugzeuges, Steuerimpulse an die Heber übermittelt, so daß auch während des Anhebens oder Absenkens eine vorgegebene Nivellierlage beibehalten bleibt. Dadurch ergibt sich eine wesentliche Personaleinsparung und auch eine erhöhte Sicherhheit bei den Hubvorgängen.

Zweckmäßigerweise ist der Lagegeber vorübergehend am Flugzeug, insbesondere eingriffsfrei an der Außenhaut anbringbar, wobei dazu ein Halter vorzugsweise mit Saugnäpfen od. dgl. vorgesehen ist. Das Anbringen des Lagegebers ist somit praktisch an jedem Flugzeug ohne besondere Maßnahmen möglich.

Der Lagegeber ist zweiachsig zur Auswertung der Lage der durch die Flugzeug-Längsachse und die Flugzeug-Querachse bestimmten Ebene ausgebildet. Dadurch kann während des Anhebens und Absenkens des Flugzeuges sowohl die Längsneigung als auch die Querneigung des Flugzeuges überwacht und ausgeregelt werden.

Eine mögliche Ausführungsform sieht vor. daß der Lagegeber mit einem z. B. in einem Kugelgelenk od. dgl. gelagerten Pendel und bei dessen freiem Ende angeordneten Näherungsfühlern für das freie Pendelende bzw. einem dort befindlichen Geberteil ausgebildet ist. Ein solcher Lagegeber ist vergleichsweise einfach im Aufbau und es läßt sich durch das Pendelprinzip eine hohe Meßgenauigkeit erreichen.

Nach einer Weiterbildung der Erfindung weist der Lagegeber ein Gehäuse auf, das über eine Lagejustiereinrichtung mit seinen am Flugzeug anzubringenden Halter verbunden ist. Der Lagegeber selbst kann dadurch relativ zu seinem Halter verstellt werden, so daß dadurch eine mechanische Vornivellierung des Lagegebers vorgenommen werden kann. Dadurch können auch Lageunterschiede durch Anordnung des Lagegebers an verschiedenen Stellen des Flugzeuges ausgeglichen werden. Eine Weiterbildung der Erfindung sieht vor, daß die Heber mit einer Steuereinheit verbunden sind, die ihrerseits einen Anschluß für den Lagegeber aufweist und daß an der Steuereinheit ggf. eine Umschalteinrichtung für einen wahlweise manuellen oder einen automatischen Betrieb in Verbindung mit dem Lagegeber vorgesehen ist. Über diese Steuereinheit kann zentral die Bedienung der z. B. drei Heber bezüglich der Hubrichtung und Hubgeschwindigkeit erfolgen und außerdem hat man dadurch die Möglichkeit, den Vorgang manuell gesteuert oder aber wahlweise auch automatisch gesteuert ablaufen lassen zu können, so daß die Einrichtung praktisch universell einsetzbar ist.

Zusätzliche Ausgestaltungen der Erfindung sind in en weiteren Unteransprüchen aufgeführt. Nachstehend ist die Erfindung mit ihren wesentlichen Einzelheiten anhand von Ausführungsbeispielen näher erläutert.

Es zeigt:

Fig. 1 eine Seitenansicht eines hochgebockten und mittels Hebern unterstützten Flugzeuges,

Fig. 2 eine Aufsicht des in Fig. 1 gezeigten Flugzeuges mit prinzipieller Anordnung einer Hebeeinrichtung,

Fig. 3 ein Prinzipschema der Hebeeinrichtung,

Fig. 4 einen Heber in Seitenansicht und

Fig. 5 in Aufsicht,

Fig. 6 einen Lagegeber in stark - schematisierter Darstellung,

Fig. 7 eine Ansicht gemäß der Schnittlinie VII-VII in Fig. 6,

Fig. 8 stärker schematisiert eine andere Ausführungsform eines Lagegebers und

Fig. 9 ebenfalls stärker schematisiert eine wiederum abgewandelte Ausführungsform eines Lagegebers.

Eine in Fig. 2 gezeigte Einrichtung 1 dient zum Hochbocken von Flugzeugen 2 und umfaßt im wesentlichen einen am Flugzeug anbringbaren Lagegeber 3, vorzugsweise drei Heber 4 sowie eine Steuereinheit 5. In Fig. 2 ist außerdem noch eine Stromversorgung 6 für die Einrichtung 1 dargestellt. Die Heber 4 greifen unter dem Bug 7 sowie unter den Tragflächen 8 an (vgl. auch Fig. 1). Durch die Verbindungslinien 9 ist angedeutet, daß der Lagegeber 3 mit der Steuereinheit 5 und diese mit den Hebern 4 in Steuerverbindung stehen.

Der Lagegeber ist zweiachsig zur Auswertung der Lage der durch die Flugzeug-Längsachse und die Flugzeug-Querachse bestimmten Ebene ausgebildet. Dadurch kann mit diesem Lagegeber sowohl die Längs-als auch die Querneigung des Flugzeuges erfaßt werden.

Die Steuereinheit 5 weist eine Umschalteinrichtung für einen wahlweise manuellen und einen automatischen Betrieb in Verbindung mit dem Lagegeber 3 auf. In manueller Betriebsstellung können z. B. mittels eines Steuerknüppels die einzelnen Heber 4 angehoben oder abgesenkt werden. Im praktischen Betrieb werden die Heber 4 zunächst mittels dieses Steuerknüppels in eine Angriffsposition zu den jeweiligen Stützpunkten 10 am Flugzeug 2 hochgefahren. Unter Zuhilfenahme einer z.B.bordeigenen Nivelliervorrichtung, die in der Regel ein Pendel mit einer Zielscheibe aufweist, die im Fahrwerksschacht angebracht ist, wird dann das Flugzeug ausnivelliert. Anschließend kann auf automatischen Betrieb umgeschaltet werden, wobei dann der Lagegeber 3 die Ansteuerung der einzelnen Heber 4 über die Steuereinheit 5 übernimmt. Ab diesem Zeitpunkt kann das Flugzeug in der vorgegebenen Lage kontinuierlich hochgebockt werden, wobei Abweichungen von der ausnivellierten Sollage von dem Lagegeber 3 erkannt und durch unterschiedliche Ansteuerung der Heber 4 ausgeregelt werden.

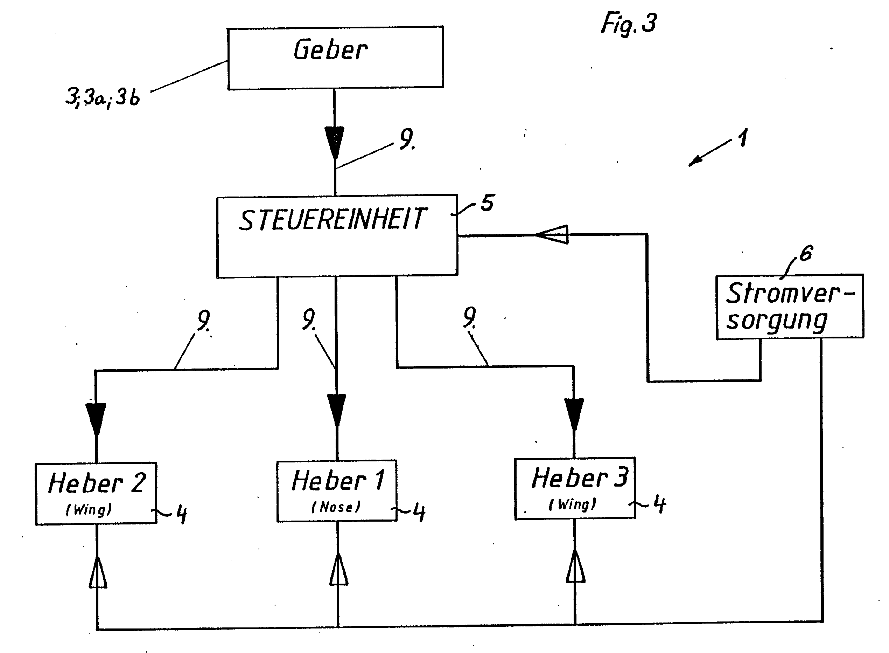

In Fig. 3 ist in Anlehnung an Fig. 2 nochmals das prinzipielle Schaltschema mit den Steuerverbindungen 9 zwischen dem Lagegeber 3 und der Steuereinheit 5 einerseits und der Steuereinheit und den Hebern 4 andererseits erkennbar. Außerdem sind noch die Verbindungsleitungen zwischen der Stromversorgung 6 und den einzelnen Gruppen der erfindungsgemäßen Einrichtung 1 eingezeichnet.

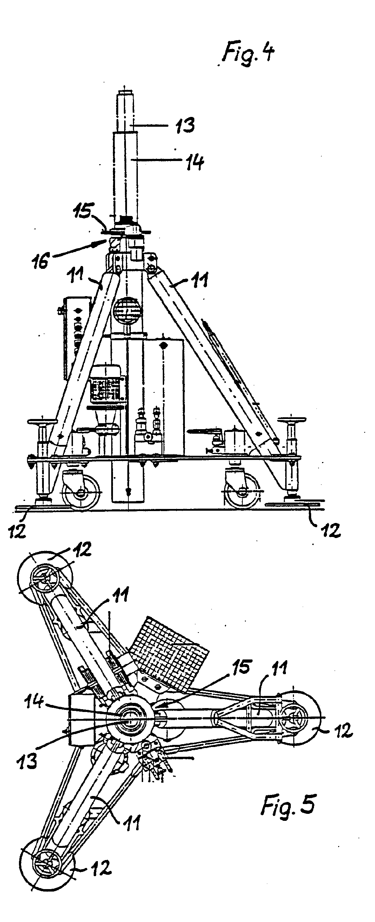

Wie in Fig. 1 und 2 angedeutet, sind die Heber 4 als sogenannte Dreibockheber ausgebildet, was deutlicher in den Fig. 4 und 5 erkennbar ist. Die Heber 4 weisen drei Stützarme 11 auf, die oben zusammengeführt sind und an deren unteren Enden sich Stützfüße 12 befinden. Der Heber ist in Fig. 4 strichpunktiert in ausgefahrener Position dargestellt, wobei am oberen Ende eine Anschlußschraube 13 und nach unten anschließend eine Gewindespindel 14 erkennbar sind. Die Gewindespindel 14 ist am unteren Ende mit einem in einem Zylinder geführten Hubkolben verbunden und läßt sich hydraulisch mit Hilfe einer Motorpumpe axial anheben und absenken. Die Gewindespindel 14 selbst arbeitet mit einer sogenannten Sicherheitsmutter 15 zusammen, die je nach Hubstellung manuell oder automatisch nachgestellt wird und auf einem oberen Widerlager 16 aufliegen kann. Auch bei einem Störungsfall und Versagen der Hydraulik wird so mechanisch die Stütze in der jeweils gerade eingenommenen Lage gehalten.

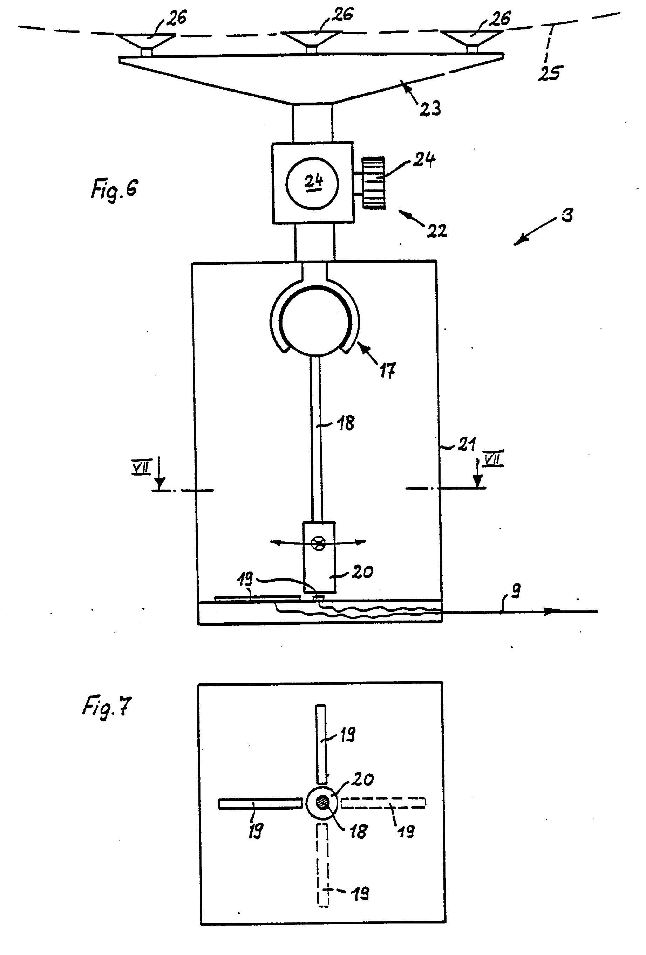

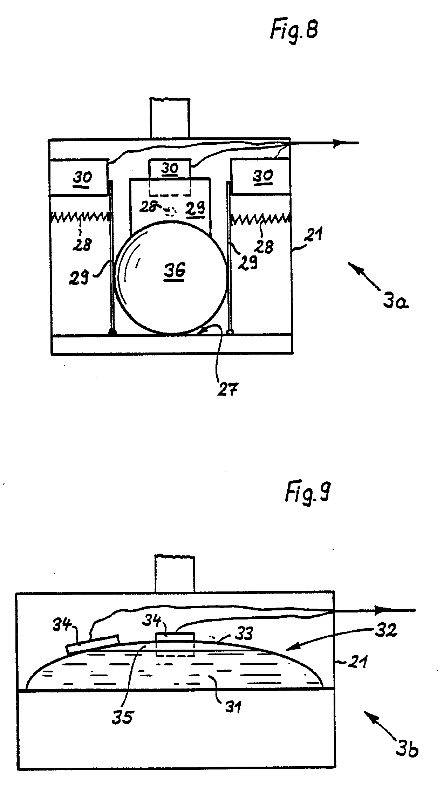

In Fig. 6 ist stark schematisiert eine mögliche Ausführungsform eines Lagegebers 3 gezeigt. Dieser Lagegeber 3 weist einen in einem Kugelgelenk 17 gelagerten Pendel 18 auf, bei dessen unterem Ende Näherungsfühler 19 angeordnet sind. Diese Näherungsfühler können beispielsweise aus magnetfeldempfindlichen Sonden, z. B. Hallgeneratoren bestehen. In diesem Falle weist das untere Pendelende als Geberteil einen Permanentmagneten 20 auf. Wie in Fig. 7 erkennbar, sind wenigstens zwei Näherungsfühler 19 vorgesehen, die vorzugsweise in einem rechten Winkel zueinander in der Pendelebene angeordnet sind. Durch diese Anordnung der Näherungsfühler 19 kann jede Neigung des Lagegebers 3 bzw. des Flugzeuges 2 in der durch die Flugzeug-Längsachse und die Flugzeug-Querachse bestimmten Ebene erfaßt werden. Bei einer Änderung der Lage ändert sich entsprechend auch die Lage des Permanentmagneten 20 relativ zu den Näherungsfühlern 19 und somit das diese beeinflussende Magnetfeld. Die daraus resultierenden elektrischen Größen können von den Näherungsfühlern 19 abgenommen, elektronisch verarbeitet und als Steuersignale für die Heber 4 verwendet werden. Wie strichliniert in Fig. 7 angedeutet, können auch vier jeweils im rechten Winkel zueinander angeordnete Näherungsfühler 19 für eine erhöhte Meßsicherheit und/oder Genauigkeit eingesetzt werden.

Anstatt von magnetfeldabhängigen Näherungsfühlern 19 können bei diesem Lagegeber 3 auch induktive oder kapazitive Fühler vorgesehen sein, wobei dann anstatt des Permanentmagneten 20 am unteren Ende des Pendels 18 ein Materialstück z. B. aus Metall genügt.

Der in einem Gehäuse 21 befindliche Lagegeber 3 ist im Ausführungsbeispiel gemäß Fig. 6 über eine Lagejustiereinrichtung 22 mit seinem am Flugzeug anzubringenden Halter 23 verbunden. Bei der Lagejustiereinrichtung sind zwei Stellschrauben 24 angedeutet, mittels denen die relative Lage zwischen dem Halter 23 und dem Gehäuse 21 des Lagegebers 3 in zwei Richtungen verändert werden kann. In vorteilhafter Weise ist dadurch die genaue Anbringlage des Halters 23 bzw. des gesamten Lagegebers 3 am Flugzeug, insbesondere der Rumpfunterseite unkritisch, da nach dem Anbringen mittels der Lagejustiereinrichtung 22 ein Vornivellieren erfolgen kann, wobei der Lagegeber so eingestellt wird, daß sich etwa eine Neutralstellung des Pendels 18 ergibt.

Zum Anbringen des Halters 23 bzw. des damit verbundenen Lagegebers 3 an der Flugzeugaußenhaut 25, die in Fig. 6 strichliniiert angedeutet ist, weist der Halter 23 Saugnäpfe 26 auf. Dadurch ist eine Anbringung praktisch an beliebiger Stelle ohne besondere Maßnahmen am Flugzeug selbst möglich.

Erwähnt sei noch, daß anstatt einer Steuerverbindung über Kabel 9 gegebenenfalls auch eine drahtlose Verbindung über Funk vorgesehen sein kann.

Fig. 8 zeigt noch eine andere Ausführungsform eines Lagegebers 3 a, bei dem ein auf einer Ebene 27 gelagerter Rollkörper, im Ausführungsbeispiel eine Kugel 36 vorgesehen ist, wobei jeweils gegenüberliegend und etwa rechtwinklig zueinander durch Federn 28 abgestüze Anlageflächen 29 vorgesehen sind, an denen Druck-und/oder Wegaufnehmer 30 angreifen. Bei einer von der horizontalen Lage abweichenden Lage ergibt sich jeweils an einer oder zwei Anlageflächen 29 eine Druckbeaufschlagung, die durch die Sensoren erfaßt und zur Steuerung der Heber 4 verwendet werden können. Zur Verdeutlichung ist hier die vordere An lagefläche 29 mit Feder 28 und zugehörigem Aufnehmer 30 weggelassen.

Eine weitere mögliche Ausführungsform eines Lagegebers 3b zeigt Fig. 9. Dieser Lagegeber weist eine mit einer Flüssigkeit 31 gefüllte Libelle 32 auf, die einen oberen, sphärisch gewölbten Abschluß 33 aufweist. Die Libelle ist soweit mit Flüssigkeit gefüllt, daß sich unter dem Abschluß 33 eine kugelabschnittförmige Gasblase 45 bildet. Über wenigstens zwei z. B. induktive oder kapazitive Sensoren 34, die vorzugsweise rechtwinklig zueinander jeweils am Rand der Gasblase in Neutralstellung des Lagegebers 3 b angeordnet sind, kann eine Lageveränderung der Gasblase erfaßt werden.

Schließlich sind auch noch in Verbindung mit den vorerwähnten Beispielen von Lagegebern 3, 3 a, 3 b anhand der Figuren 6 bis 9 auch der Einsatz optoelektronischer Elemente zur Lageauswertung od. dgl. möglich.

Die Meßauflösung des Lagegebers kann auch bei Verwendung unterschiedlicher Grundprinzipien im Bereich von etwa ± 0,5° liegen.

Mit Hilfe der erfindungsgemäßen Einrichtung 1 kann das nivellierte Hochbocken von Flugzeugen praktisch automatisch ablaufen, wobei zur Bedienung und Überwachung eine Bedienperson genügt.

Die Einrichtung 1 kann auch eine Notabschalt-Vorrichtung aufweisen, die bei Überschreiten eines bestimmten Schrägwinkels des Flugzeuges 2 von beispielsweise ± 0,5°, der gegebenenfalls vorjustiert werden kann, den Anhebe-oder Absenkvorgang der Einrichtung 1 unterbricht. Insbesondere mit Hilfe einer Notabschalt-Vorrichtung kann das vollautomatische Nivelliersystem die Funktion einer Gleichlaufsicherung auch in der Weise übernehmen, daß beim Überschreiten einer Neigung des Flugzeuges 2 um beispielsweise mehr als ± 0,5° "Not-Aus", d. h. automatischer Total-Stop der Einrichtung 1 erfolgt. Dabei kann die Notabschalt-Vorrichtung der Einrichtung 1 einen separaten Lagegeber aufweisen, der von dem Lagegeber 3, 3a, 3b zur bloßen Lageerkennung getrennt ist.

Alle in der Beschreibung, den Ansprüchen und der Zeichnung dargestellten Merkmale können sowohl einzeln als auch in beliebiger Kombination miteinander erfindungswesentlich sein.

## Claims

1. Einrichtung zum Hochbocken von Flugzeugen mit Hilfe von wenigstens drei, vorzugsweise hydraulischen Hebern, die insbesondere unter den Tragflächen und dem Bug des Flugzeuges ansetzbar sind, **dadurch gekennzeichnet,** daß sie einen am Flugzeug (2) anbringbaren Lagegeber (3, 3 a, 3 b) aufweist, der zur Einhaltung einer vorgebbaren Lage des Flugzeuges (2) während des Anhebens oder Absenkens mit den Hebern (4) in Steuerverbindung steht.

2. Einrichtung nach Anspruch 1, dadurch gekennzeichnet, daß der Lagegeber (3, 3 a, 3 b) vorübergehend am Flugzeug, insbesondere eingriffsfrei an dessen Außenhaut anbringbar ist und daß dazu ein Halter (23) vorzugsweise mit Saugnäpfen (26) od. dgl. vorgesehen ist.

3. Einrichtung nach Anspruch 1 oder 2, dadurch gekennzeichnet, daß der Lagegeber (3, 3 a, 3 b) zweiachsig zur Auswertung der Lage der durch die Flugzeug-Längsachse und die Flugzeug-Querachse bestimmten Ebene ausgebildet ist.

4. Einrichtung nach einem der Ansprüche 1 bis 3, dadurch gekennzeichnet, daß der Lagegeber (3) mit einem in einem Kugelgelenk (17) od. dgl. gelagerten Pendel (18) und bei dessen freiem Ende angeordneten Näherungsfühlern (19) für das freie Pendelende bzw. einem dort befindlichen Geberteil (20) ausgebildet ist.

5. Einrichtung nach Anspruch 4, dadurch gekennzeichnet, daß am freien Ende des Pendels als Geberteil ein Permanentmagnet (20) angebracht ist und daß als Näherungsfühler Hall-Generatoren dienen.

6. Einrichtung nach einem der Ansprüche 1 bis 4, dadurch gekennzeichnet, daß als Näherungsfühler (19) induktive oder kapazitive Fühler vorgesehen sind.

7. Einrichtung nach einem der Ansprüche 1 bis 4, dadurch gekennzeichnet, daß am Pendelende eine Lichtquelle angebracht ist und daß als Näherungsfühler optoelektronische Fühler vorgesehen sind.

8. Einrichtung nach einem der Ansprüche 1 bis 7, dadurch gekennzeichnet, daß der Lagegeber (3, 3a, 3b) ein Gehäuse (21) aufweist, das über eine Lagejustiereinrichtung (22) mit seinem am Flugzeug anzubringenden Halter (23) verbunden ist.

9. Einrichtung nach einem der Ansprüche 1 bis 8, dadurch gekennzeichnet, daß die Meßauflösung des Lagegebers (3, 3 a, 3 b) etwa ± 0,5° beträgt.

10. Einrichtung nach einem der Ansprüche 1 bis 9, dadurch gekennzeichnet, daß wenigstens zwei Näherungsfühler (19) etwa in der Pendelebene insbesondere rechtwinklig zueinander angeordnet sind und daß vorzugsweise vier in der Pendelebene über Kreuz angeordnete Näherungsfühler vorgesehen sind.

11. Einrichtung nach einem der Ansprüche 1 bis 10, dadurch gekennzeichnet, daß die Heber (4) von einer Betriebsstellung mit automatischer Nachführung durch den Lagegeber (3, 3 a, 3 b) auf manuelle und separate Steuerung umschaltbar sind.

12. Einrichtung nach einem der Ansprüche 1 bis 12, dadurch gekennzeichnet, daß die Steuerverbindungen (9) von dem Lagegeber (3, 3 a, 3 b) zu den Hebern (4) über elektrische Kabel, gegebenenfalls drahtlos über eine Funkverbindung erfolgt.

13. Einrichtung nach einem der Ansprüche 1 bis 12, dadurch gekennzeichnet, daß die Heber mit einer Steuereinheit (5) verbunden sind, die ihrerseits einen Anschluß für den Lagegeber (3, 3 a, 3 b) aufweist und daß an der Steuereinheit (5) ggf. eine Umschalteinrichtung für einen wahlweise manuellen oder einen automatischen Betrieb in Verbindung mit den Lagegeber (3, 3 a, 3 b) vorgesehen ist.

14. Einrichtung nach einem der vorstehenden Ansprüche, dadurch gekennzeichnet, daß der Lagegeber (3 a) einen auf einer Ebene (27) gelagerten Rollkörper (36) und mit diesem zusammenwirkende Lage-und/oder Drucksensoren (30) aufweist.

15. Einrichtung nach einem der vorstehenden Ansprüche, dadurch gekennzeichnet, daß der Lagegeber (3 b) eine flüssigkeitsgefüllte Libelle (32) mit einem sphärisch gewölbten oberen Abschluß (33) aufweist und daß wenigstens zwei z. B. kapazitive oder induktive Sensoren (34) zur Lageerfassung der unter dem oberen Abschluß befindlichen Gasblase vorgesehen sind.

16. Einrichtung nach einem der Ansprüche 1 bis 15, dadurch gekennzeichnet, daß diese eine Notabschalt-Vorrichtung aufweist, die bei Überschreiten eines bestimmten, gegebenenfalls vorgewählten Neigungswinkel des Flugzeuges (2) den Anhebe-oder Absenkvorgang der Einrichtung (1) unterbricht, wobei die Notabschalt-Vorrichtung vorzugsweise bei einer Winkel-Abweichung von ± 0,5° anspricht.

17. Einrichtung nach Anspruch 16, dadurch gekennzeichnet, daß die Notabschalt-Vorrichtung zur Bestimmung des den Notstop auslösenden neigungswinkel einen separaten Lagegeber aufweist.

Fig. 2

9

8

4

2

5

Steuer-
einheit

Geber

3

4

4

7

4

8

1

Stromver-
sorgung

6

Fig. 1

2

8

7

3

10

1

10

4

25

4

0 287 044

Fig. 3

Geber

3;3a;3b

9.

1

STEUEREINHEIT   5

Stromver-
sorgung   6

9.        9.        9.

Heber 2
(Wing)   4

Heber 1
(Nose)   4

Heber 3
(Wing)   4

0 287 044

Fig.4

Fig.5

Fig.6

26    26    26

25

23

24

24

22

3

17

18

21

VII    VII

20

19    9

Fig.7

19

20

19    19

18

19

19

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 912 288 (F'GEPPERT) <br> * Zusammenfassung; Figuren; Spalte 1, Zeilen 51-53; Spalte 2, Zeilen 39-46,50-68; Spalte 3, Zeilen 22-34 * | 1 | B 66 F 3/46 <br> B 64 F 5/00 |
| A | | 3,10-13,15 | |
| P,X | DE-A-3 537 640 (ZIPPO GmbH) <br> * Zusammenfassung; Figuren; Ansprüche 1,4,5,7; Spalte 2, Zeile 58 - Spalte 3, Zeile 24; Spalte 3, Zeilen 53-64; Spalte 4, Zeilen 3-38 * | 1 | |
| P,A | | 3,11,12,13 | |
| A | GB-A- 952 645 (LLOYD'S PACKING WAREHOUSES LTD) <br> * Figur; Seite 1, Zeilen 57-75; Seite 2, Zeilen 77-88,110-128; Seite 3, Zeilen 8-34 * | 1,12,16 | |
| A | FR-A-2 440 851 (BOIREAU) <br> * Figuren 1,2; Seite 2, Zeile 27 - Seite 3, Zeile 31 * | 1,3,4 | RECHERCHIERTE SACHGEBIETE (Int. Cl.4) <br><br> B 66 F <br> B 64 F |
| A | FR-A-1 455 068 (TECALEMIT S.A.) <br> * Figuren 1,4,5; Seite 1, linke Spalte, Zeilen 1-27; Seite 3, linke Spalte, Zeilen 18-33,45-58 * | 1,7,15 | |
| A | DE-A-3 507 231 (M.B.B. GmbH) | | |
| A | FR-A-2 491 048 (SOVAM) | | |

Der vorliegende Recherchenbericht wurde für alle Patentansprüche erstellt

| Recherchenort | Abschlußdatum der Recherche | Prüfer |
|---|---|---|
| DEN HAAG | 27-07-1988 | GUTHMULLER J.A.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument

EPO FORM 1503 03.82 (P0403)